# EUROPÄISCHE PATENTSCHRIFT

(11) **EP 3 139 760 B1**
(45) Veröffentlichungstag und Bekanntmachung des Hinweises auf die Patenterteilung: **18.11.2020**
(21) Anmeldenummer: 15720086.6
(22) Anmeldetag: 04.05.2015
(51) Int. Cl.: A23G 1/20, A23G 1/21

(54) **STEMPELPLATTE MIT FORMENANSCHLAG**
STAMPING PLATE WITH FORMING STOP
PLAQUE D'ESTAMPAGE DOTÉE DE BUTÉE DE FORMAGE

(30) Priorität: 06.05.2014 EP 14167241
(43) Veröffentlichungstag der Anmeldung: 15.03.2017
(73) Patentinhaber: Bühler AG, 9240 Uzwil (CH)
(72) Erfinder: PACK, Tanja, 51580 Reichshof-Allinghausen (DE); PAUL, Michael, 51702 Bergneustadt (DE); MARCINKOWSKI, David, 51545 Waldbröl (DE); HUPERZ, Frank, 51702 Bergneustadt (DE)
(74) Vertreter: Hepp Wenger Ryffel AG
(86) Internationale Anmeldenummer: PCT/EP2015/059708
(87) Internationale Veröffentlichungsnummer: WO 2015/169741

(56) Entgegenhaltungen:
- EP-A1- 2 018 811
- EP-A1- 2 543 259
- WO-A1-98/52425
- WO-A1-03/094626
- WO-A1-2013/006599

## Beschreibung

Die Erfindung bezieht sich auf eine Vorrichtung zur Herstellung schalenartig geformter Verzehrgüter aus einer Lebensmittelmasse, insbesondere einer Fettmasse, bevorzugt einer kakaohaltigen bzw. schokoladeartigen Fettmasse. Derartig hergestellte Schokoladenhülsen werden z.B. für die Herstellung von Pralinen verwendet.

Eine derartige Vorrichtung enthält eine Vielzahl von Hohlformen oder Alveolen, die typischerweise als Vertiefungen in einer Form, einem Formenblock oder einer Formenplatte ausgebildet sind. Diese Hohlformen oder Alveolen können mit einer oder mehreren fliessfähigen, bevorzugt temperierten Lebensmittelmassen, insbesondere einer Fettmasse, befüllt werden. Die Alveolen können ganz oder teilweise befüllt werden. Die Innenfläche einer jeweiligen Alveole bestimmt dabei die Aussenfläche eines herzustellenden schalenartigen Verzehrgutes.

Weiterhin enthält die Vorrichtung eine Vielzahl temperierbarer Stempel, die an einer Haltevorrichtung beweglich gelagert sein können, wobei jeweils ein Stempel in jeweils eine der Alveolen absenkbar ist. Die Stempel können mit den Formen mitbewegbar sein. Alternativ oder zusätzlich kann die Form vertikal bewegbar sein, sodass die Form mit den Alveolen zu den Stempeln anhebbar ist. Die Aussenfläche eines jeweiligen Stempels bestimmt dabei die Innenfläche des herzustellenden schalenartigen Verzehrgutes. Die Stempel sind in der Regel auf einer Stempelplatte angeordnet.

Mit dieser Vorrichtung lassen sich schalenartig geformte Verzehrgüter herstellen. Diese werden in der Regel weiterverarbeitet, zum Beispiel gefüllt und/oder gedeckelt oder zu einem Hohlkörper zusammengefügt.

Zu Beginn des Verfahrens wird geschmolzene Fettmasse in die Hohlformen oder Alveolen einer Form, eines Formenblocks oder einer Formenplatte eindosiert, sodass diese zu einem Teil mit der geschmolzenen Masse gefüllt werden. In der Regel werden die teilgefüllten Formen kurz vibriert, um eventuelle Gaseinschlüsse auszutreiben und/oder die geschmolzene Masse zu verteilen. Dann wird die Haltevorrichtung mit der an ihr angebrachten mindestens einen Stempelplatte gegen die Form, den Formenblock bzw. die Formenplatte abgesenkt, wobei die in der Regel gekühlten Stempel in die mit der geschmolzenen Masse teilgefüllten Alveolen eindringen und die geschmolzene Masse verdrängen, die sich dann in dem jeweiligen Hohlraum zwischen der Aussenfläche eines Kühlkörpers und der Innenfläche einer Alveole verteilt. Die Haltevorrichtung mit den Stempeln verbleibt dann während einer kurzen Verweilzeit in dieser abgesenkten Stellung, bis die in den jeweiligen Alveolen verteilte Masse erstarrt ist. Anschliessend wird die Stempelplatte wieder angehoben, und die fertig geformten schalenartigen Verzehrgüter aus erstarrter Masse können den Formen entnommen werden. Alternativ oder zusätzlich können die Formen in Richtung der Stempel bewegt werden. Dieses Verfahren wird auch als "Kaltstempeln" bezeichnet.

Als Form, Formenblock oder Formenplatte mit Hohlformen bzw. Alveolen wird in der Regel eine Kunststoffplatte verwendet.

Die kühlbaren Stempel der Stempelplatte bestehen in der Regel aus einem möglichst gut wärmeleitenden Metall wie z. B. Aluminium oder Kupfer.

Überschüssige Lebensmittelmasse, die aus den Alveolen austritt, wird nach dem Formen zum Beispiel mit einem Schaber oder mit einer Leckwalze von der Oberfläche der Form entfernt, so dass die schalenartig geformten Verzehrgüter einen definierten Rand haben.

Im Laufe der Zeit kann es an den Formenplatten zu Verformungen und Abnutzungserscheinungen kommen. Da sie relativ dünn sind, neigen die Formenplatten dazu, sich zu verbiegen und zu wölben, sodass sie nicht mehr ganz eben sind, wenn man sie auf einen Formentisch oder eine Fördervorrichtung legt.

Um die jeweiligen Hohlräume zwischen einer Stempel-Aussenfläche und einer Hohlform-Innenfläche möglichst gleichmässig über die gesamte Form zu definieren, muss die Stempelplatte bei jedem Kaltstempel-Vorgang von oben gegen die Form gedrückt werden. Überschüssige Lebensmittelmasse kann dabei unkontrolliert aus den Hohlformen austreten, insbesondere wenn die Formenplatte schon Verformungen und Abnutzungen aufweist. Die überschüssige Masse kann dann Tropfen bilden, die sich nur mit einigem Aufwand entfernen lassen oder die in die schalenartig geformten Verzehrgüter gelangen.

Die Druckschrift WO98/52425 A1 zeigt eine temperierbare Stempelplatte mit Vorsprüngen. Auf der Platte sind ausserdem Druckstifte angeordnet, welche in Schliesslage des Werkzeuges auf eine Oberfläche der Form drücken und mit denen die Form auf ein Endlosband gedrückt wird und Verwerfungen der Form ausgeglichen werden.

Um einen konstanten Abstand zwischen der Stempelplatte und der Formenplatte zu gewährleisten, wurde z. B. in der EP 0 945 069 A1 oder in der EP 0 925 720 A1 vorgeschlagen, sämtliche Stempel an der Haltevorrichtung unabhängig aufzuhängen. Dies ermöglicht zwar eine Verbesserung der Abdichtung jeder einzelnen Hohlform, doch muss dafür eine grosse Anzahl von Einzelteilen an der Haltevorrichtung und somit ein grosser Kostenaufwand in Kauf genommen werden.

In der EP 1 863 355 wird offenbart, Stempel in Stempelgruppen anzuordnen, die unabhängig voneinander gelagert sind. Auch dieses Vorgehen benötigt für die Lagerung der Stempelgruppen einen grossen apparativen Aufwand.

Aus WO 97/49296 und EP 1 589 823 sind Stempel bekannt, die mit einer flexiblen Dichtlippe ausgestattet sind. Die Dichtlippen unterliegen einem Verschleiss, müssen kontrolliert, gereinigt und gegebenenfalls ausgetauscht werden. Insbesondere wenn die Formenplatte nicht mehr ganz eben ist, kann auch durch eine Dichtlippe unkontrolliert überschüssige Lebensmittelmasse austreten.

Es hat sich gezeigt, dass überschüssige Lebensmittelmasse kontrolliert austreten kann, wenn der Stempel die Hohlform nicht komplett abdichtet, sondern zwischen dem Rand der Stempel und dem Rand der Hohlformen während des Formens ein Spalt mit einer bestimmten Spaltbreite verbleibt.

Durch diesen Spalt kann überschüssige Lebensmittelmasse gleichmässig aus den Hohlformen austreten. Sie bildet einen Film auf der Formenplatte, der durch eine Leckwalze leicht entfernbar ist.

Damit die überschüssige Lebensmittelmasse bei jeder Alveole auf der gesamten Formenplatte einen Film bildet, muss die Spaltbreite über die gesamte Form in etwa gleich bleiben, was schwierig ist, insbesondere wenn die Form schon Verformungen und Abnutzungen aufweist.

Der Erfindung liegt die Aufgabe zugrunde, eine Vorrichtung und ein Verfahren der eingangs genannten Art bereitzustellen, welche die Nachteile des Bekannten vermeidet und einen definierten Austritt von überschüssiger Lebensmittelmasse bei allen Stempel/Alveolen-Paaren auch nach einer langen Betriebszeit der Vorrichtung ermöglicht.

Die Aufgabe wird gelöst mit einer Stempelplatte für eine Vorrichtung zur Herstellung schalenartig geformter Verzehrgüter aus einer Lebensmittelmasse, insbesondere einer Fettmasse, vorzugsweise einer kakaohaltigen bzw. schokoladeartigen Fettmasse. Bei der Herstellung können auch mehrere unterschiedliche Lebensmittelmassen verwendet werden, zum Beispiel für eine mehrlagiges schalenartiges Produkt oder eine mehrfarbiges Produkt.

Die Stempelplatte umfasst einen im Wesentlichen flächigen Grundkörper. Auf dem Grundkörper ist mindestens ein temperierbarer Stempel angeordnet, der bei bestimmungsgemässem Gebrauch in eine mit dem Stempel korrespondierende Alveole eintauchbar ist. Die Alveole ist in einer Form angeordnet und in der Alveole befindet sich die Lebensmittelmasse. Stempel und Alveole können im Wesentlichen formkomplementär sein. Der Stempel formt die Innenoberfläche des schalenartig geformten Verzehrguts, die Alveole die Aussenoberfläche. Stempel und Alveole sind so geformt, dass sich bei bestimmungsgemässem Gebrauch ein Formvolumen zwischen Stempel und Alveole ausbildet, in welchem die formbare bzw. geformte Lebensmittelmasse Platz findet.

Erfindungsgemäss ist auf dem Grundkörper mindestens ein weiteres, erhabenes Element als Abstandhalter zur Form angeordnet.

Der Abstandhalter liegt nach dem Absenken der Stempelplatte oder nach dem Anheben der Form auf der Oberfläche der Form auf und sorgt dafür, dass die Oberfläche des Grundkörpers, von welcher sich der Stempel wegerstreckt, beim Eintauchen des Stempels in die Alveole nicht auf der Oberfläche der Form anschlagen kann, selbst wenn die Alveole nicht ganz gefüllt ist oder Lebensmittelmasse aus der Alveole verdrängt wird. Dies kann passieren, wenn die Form beispielsweise nicht mehr ganz eben ist.

Die Alveole kann somit nicht von der Stempelplatte verschlossen werden, sondern es bildet sich ein Spalt zwischen dem Rand der Alveole der Form und dem in die Alveole der Form eintauchenden Stempel aus, aus welchem kontrolliert überschüssige Lebensmittelmasse austreten kann.

Insbesondere bei Alveolen und/oder Stempeln, die eine komplexe Struktur aufweisen, wird in Regel gezielt mit überschüssiger Lebensmittelmasse gearbeitet, damit jede Stelle des Formvolumens mit Lebensmittelmasse gefüllt wird. Dabei soll vor allem der Rand des schalenartigen Produkts durchgehend ausgebildet sein. Es ist also vorteilhaft, wenn die überschüssige Masse nicht an einzelnen Punkten des Randes ausgetrieben wird, sondern über den gesamten Rand. Dies wird durch das Ausbilden des Spalts ermöglicht. Wünschenswert ist überdies, dass sich der Spalt bei allen Alveolen/Stempel-Paaren ausbildet und die Spaltbreite für alle Paare in etwa gleich ist. Der Abstandhalter sorgt für eine definierte Ausbildung des Spalts.

In einer bevorzugten Ausführungsform der Erfindung ist der Abstandhalter vom Grundkörper weniger erhaben als der vom Grundkörper entfernteste Punkt des Stempels.

Der Stempel umfasst erfindungsgemäss ein Sockelelement und ein Formelement, das in die Alveole eintaucht. Der Abstandhalter besitzt eine maximale Höhe über dem Grundkörper, die grösser ist als die maximale Höhe des Sockelelements, sodass das Sockelelement die Oberfläche der Form nicht erreichen kann.

In einer vorteilhaften Ausführungsform der erfindungsgemässen Stempelplatte sind mehrere Abstandhalter und mehrere Stempel auf dem Grundkörper angeordnet, wobei die Abstandhalter insbesondere im Randbereich des Grundkörpers und vorzugsweise um die Stempel herum verteilt angeordnet sind. Bevorzugt sind die Abstandhalter gleichmässig auf der Stempelplatte verteilt, sodass sich mit den Abstandhaltern ein gleichmässig verteilter Druck auf die Form ausüben lässt. Somit kann die Form über die gesamte Fläche gleichmässig niedergedrückt und dabei gegebenenfalls in eine ebene Ausrichtung gebracht werden. Die Ausbildung von einem Spalt zwischen Alveole und Stempel für den Austritt der überschüssigen Lebensmittelmasse lässt sich über die gesamte Form und für alle Alveolen gewährleisten.

Bevorzugt ist der mindestens eine Abstandhalter aus Metall ausgeführt, insbesondere als Drehteil. Der Abstandhalter unterliegt dann kaum einem Verschleiss und ist gut zum Übertragen einer Kraft von der Stempelplatte auf die Form geeignet.

Ein Drehteil neigt aufgrund seiner glatten Oberfläche weniger zum Verschmutzen und kann zumindest gut gereinigt werden.

Vorteilhafterweise ist der mindestens eine Abstandhalter von dem Grundkörper demontierbar. Dazu weist er insbesondere ein Gewinde auf, mit welchem er an einem korrespondierenden Gewinde des Grundkörpers lösbar befestigt ist. Der Abstandhalter kann gewechselt werden, wenn dies zum Beispiel bei einer veränderten Anordnung von Alveolen in der Form, bei einer veränderten Form der Alveolen, bei neuen Füllmassen oder wegen Abnutzung notwendig werden sollte.

Der Abstandhalter weist insbesondere ein Aussengewinde auf, während an der Stempelplatte ein bevorzugt im Grundkörper versenktes Innengewinde vorgesehen ist, welches das Aussengewinde im montierten Zustand vollständig aufnimmt.

Die Stempelplatte weist bevorzugt mehr Aufnahmen für Abstandhalter auf als Abstandhalter. Die Positionen der Abstandhalter können an die jeweils benutzte Form optimal angepasst werden.

Die Abstandhalter können auch an bestehenden Stempelplatten nachgerüstet werden, wenn diese mit entsprechenden Aufnahmen, zum Beispiel mit Gewinden, versehen werden.

In einer bevorzugten Ausführungsform weist der mindestens eine Abstandhalter eine Angriffsfläche für ein Werkzeug auf. Dabei kann es sich um Ausnehmungen für einen Schraubendreher handeln. Bevorzugt weist der Abstandhalter eine Mehrkantform auf. Der Abstandhalter kann dann trotz der Angriffsfläche für das Werkzeug eine im Wesentlichen ebene Oberfläche haben, mit welcher er an der Oberfläche der Form anliegen kann.

Zusätzlich kann die Stempelplatte so ausgebildet sein, dass auf oder an dem Grundkörper mindestens eine Führung für die Form angeordnet ist. Die Führung sorgt dafür, dass bei einem Absenken der Stempelplatte oder bei einem Anheben der Form korrespondierende Paare von Stempeln und Alveolen mit einer bestimmten gewünschten Präzision aufeinander treffen.

Die Führung kann mit einem korrespondierenden Führungselement auf der Form zusammenwirken und beispielsweise als Zentrierbolzen ausgeführt sein, der in eine Zentrieröffnung trifft. Bevorzugt ist die Führung mit zwei rechtwinklig angeordneten Leisten ausgeführt, welche eine Ecke der Form umgreifen können.

Die Aufgabe wird ausserdem gelöst durch eine Vorrichtung zur Herstellung schalenartig geformter Verzehrgüter aus mindestens einer Lebensmittelmasse, insbesondere einer Fettmasse, vorzugsweise einer kakaohaltigen bzw. schokoladeartigen Fettmasse, mit einer Stempelplatte wie oben beschrieben. Die Vorrichtung weist ausserdem eine Aufnahme für eine Form mit mindestens einer Alveole zum Einfüllen von fliessfähiger Lebensmittelmasse auf und bildet damit eine Kaltstempelvorrichtung.

Bei der Aufnahme kann es sich um eine Fördervorrichtung für Formen handeln, zum Beispiel ein Förderband, einen Roll- und/oder Kettenförderer. Mit der Fördervorrichtung werden die Formen an die Stempelplatte herangebracht und gegebenenfalls zusammen mit der Stempelplatte bewegt. Bei der Aufnahme kann es sich auch um einen Formentisch handeln, auf dem die Formen aufliegen oder einhängen.

Bevorzugt umfasst die Vorrichtung zumindest während des Betriebs eine Form mit mindestens einer Alveole zum Einfüllen von fliessfähiger Lebensmittelmasse, wobei der mindestens eine Abstandhalter an der Stempelplatte so angeordnet ist, dass er beim Formen der Lebensmittelmasse auf der Oberfläche der Form aufliegt und nicht auf eine Alveole trifft.

Der mindestens eine Abstandhalter ist derart ausgebildet, dass beim Eintauchen des Stempels in die Alveole der Form ein Spalt zwischen dem Rand der Alveole und dem in die Alveole eintauchenden Stempel gewährleistet ist. Über diesen Spalt, der bevorzugt umlaufend ist, kann überschüssige Lebensmittelmasse austreten und bildet um die Alveole herum einen teppichartigen Film, der sich leicht abtragen lässt.

Die Breite des Spaltes beträgt bevorzugt etwa 0.1 bis 1 mm, besonders bevorzugt 0.1 -0.5mm, weiter besonderes bevorzugt etwa 0.18 bis 0.22 mm.

Vorzugsweise ist die Form aus Kunststoff gefertigt und weist Versteifungsstege auf, wobei der mindestens eine Abstandhalter so angeordnet ist, dass er beim Formen der Lebensmittelmasse auf der Form im Bereich eines Versteifungssteges aufliegt.

Kunststoffformen sind leicht, lassen sich einfach mit einer Fördervorrichtung durch eine Giessanlage, insbesondere durch eine Kaltstempelvorrichtung, führen, sind leicht zu leeren und zu reinigen. Wenn sie entsprechende Stege als Versteifungen aufweisen, so kann auf sie eine Kraft ausgeübt werden.

Die Kunststoffformen weisen zwei Hauptflächen auf, die eine Oberseite bzw. Unterseite der Form bilden. Die Oberseite ist diejenige Seite, von der aus die Alveolen mit Lebensmittelmasse befüllt werden. Die andere Seite ist die Unterseite. Die Stege sind bevorzugt an der Unterseite angeordnet. So kann die der Stempelpatte zugewandte Oberfläche der Kunststoffform möglichst glatt ausgebildet sein, damit überschüssige Lebensmittelmasse gut entfernt werden kann.

Es ist jedoch auch denkbar, dass Abstandhalter oder Versteifungselemente auf der der Stempelpatte zugewandten Oberfläche der Form angeordnet sind und der Spalt für den Austritt überschüssiger Masse so durch einen Abstandhalter auf der Form gewährleistet wird.

Weiterhin ist denkbar, dass der Abstandhalter als separates Element ausgebildet ist, welches zwischen Stempelplatte und Form führbar ist und erst an der Stempelplatte und an der Form anliegt, nachdem die Stempelplatte abgesenkt und/oder die Form angehoben wurde.

Die Aufgabe wird weiterhin gelöst durch ein Verfahren zum Herstellen von schalenartig geformten Verzehrgütern aus einer Lebensmittelmasse, insbesondere einer Fettmasse, vorzugsweise einer kakaohaltigen bzw. schokoladeartigen Fettmasse, insbesondere in einer Vorrichtung wie oben beschrieben. Das Verfahren umfasst den Schritt des Absenkens eines Stempels einer Stempelplatte in eine korrespondierende Alveole einer Form und/oder das Anheben der Form derart, dass ein an der Stempelplatte angeordneter Abstandhalter auf der Form aufliegt. Dabei wird das Ausbilden eines Spalts zwischen dem Rand der Alveole der Form und dem in die Alveole der Form eintauchenden Stempel gewährleistet. Der Spalt weist vorzugsweise eine Breite zwischen 0.1 und 1mm, bevorzugt zwischen 0.1 und 0.5 mm auf.

In einer vorteilhaften Ausführung des Verfahrens tritt überschüssige Lebensmittelmasse beim Eintauchen des Stempels in die Alveole durch den Spalt aus und ein Film aus überschüssiger Lebensmittelmasse bildet sich um die Alveole herum.

Die Filmbildung wird dadurch begünstigt, dass der Stempel einen Sockel aufweist, der dafür sorgt, dass die austretende Masse flachgedrückt wird. Zudem kann der Hals des Formelements so ausgebildet sein, dass die überschüssige Masse gleichmässig aus der Alveole ausgeleitet wird.

Der Spalt zwischen der Oberfläche des Grundkörpers und der Oberfläche der Form kann auch so eng sein, dass die austretende Masse in eine flache Form gezwängt wird.

Die Alveole wird bevorzugt vor dem Absenken des Stempel mit mindestens einer, temperierten oder nicht temperierten Lebensmittelmasse ganz oder teilweise gefüllt. Alternativ kann der Stempel einen Giesskanal umfassen, durch welchen Masse in die Alveole geführt wird und die Masse kann vor, während oder nach Absenken des Stempels in die Alveolen eindosiert werden.

Anschliessend, d. h. nach der Formung der Lebensmittelmasse und dem Herausheben des Stempels aus der Alveole und/oder der Absenkung der Form, kann die überschüssige Lebensmittelmasse von der Form entfernt werden, insbesondere mit einer Leckwalze.
Das geformte Lebensmittelprodukt wird bevorzugt anschliessend weiterverarbeitet, zum Beispiel gefüllt, gedeckelt, zu einem Hohlkörper zusammengesetzt, beschichtet und/oder verziert.
Die Aufgabe wird weiterhin gelöst durch ein Verfahren zum Umrüsten einer Stempelplatte für eine Vorrichtung zur Herstellung schalenartig geformter Verzehrgüter aus einer Lebensmittelmasse, insbesondere einer Fettmasse, vorzugsweise einer kakaohaltigen bzw. schokoladeartigen Fettmasse. Die Vorrichtung weist eine Aufnahme für eine Form mit mindestens einer Alveole zum Einfüllen von fliessfähiger Lebensmittelmasse auf. Auf der Stempelplatte ist mindestens ein temperierbarer Stempel angeordnet. An der Stempelplatte wird erfindungsgemäss mindestens ein Abstandhalter montiert, der einen Spalt zwischen dem Rand der Alveole der Form und dem in die Alveole der Form eintauchenden Stempel gewährleistet.

Weitere Details und Ausführungsformen der vorliegenden Erfindung lassen sich aus den folgenden Beispielen und Figuren entnehmen.

Es zeigen:
- Fig. 1:: eine erste perspektivische Ansicht auf eine Stempelplatte;
- Fig. 2:: eine schematische Darstellung eines Beispiels für eine erfindungsgemässe Vorrichtung in Schnittansicht;
- Fig. 3:: eine zweite perspektivische Ansicht auf die Stempelplatte;
- Fig. 4:: ein Alveolen-Stempelpaar und einen Stempel in seitlicher Ansicht.

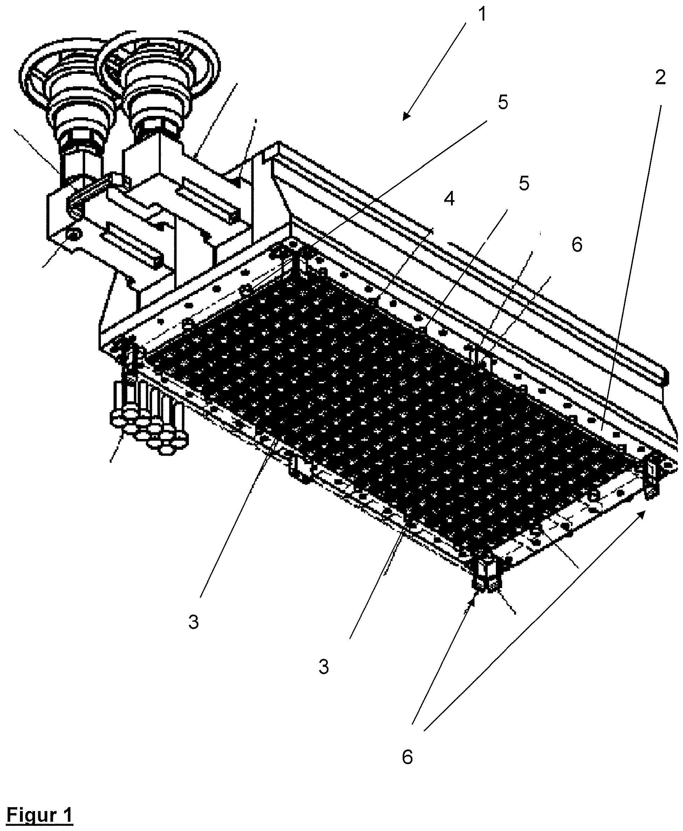

Figur 1 zeiget eine erfindungsgemässe Stempelplatte 1. Die Stempelplatte 1 umfasst einen im Wesentlichen flächigen Grundkörper 2 und eine Vielzahl von auf dem Grundkörper 2 angeordneten, temperierbaren Stempeln 3.

Diese werden bei bestimmungsgemässem Gebrauch in eine mit Stempel 3 korrespondierende Alveole geführt, in der sich die Lebensmittelmasse befindet.

Auf dem Grundkörper 2 sind weitere erhabene Elemente 4 als Abstandhalter 5 zur Form angeordnet.

Auf dem Grundkörper sind ausserdem Führungselemente 6 angeordnet.

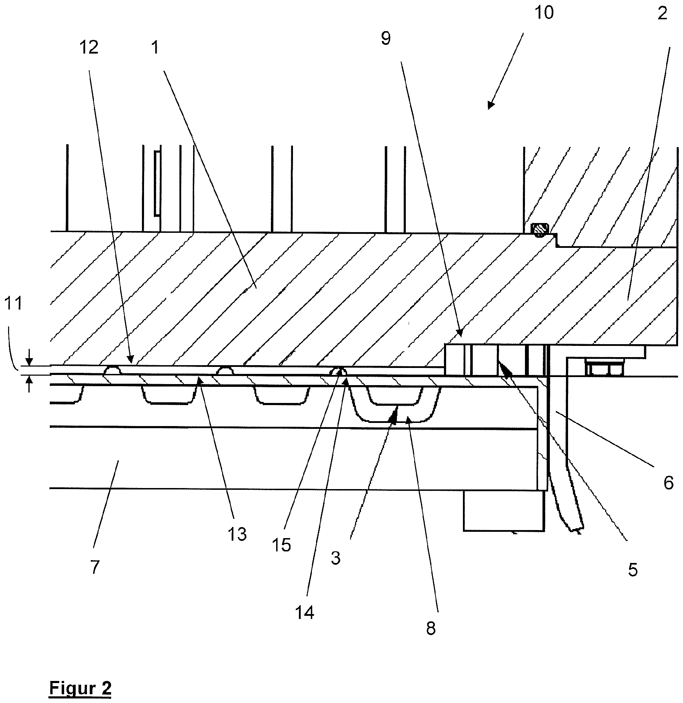

Figur 2 zeigt eine schematische Darstellung eines Beispiels für eine erfindungsgemässe Vorrichtung 10 in Schnittansicht. Die Vorrichtung 10 umfasst eine Stempelplatte 1 und eine Form 7, in welcher Alveolen 8 ausgebildet sind, die mit Lebensmittelmasse gefüllt werden.

Auf dem Grundkörper 2 der Stempelplatte 1 sind Stempel 3 angeordnet. Ausserdem sind im Randbereich 9 des Grundkörpers 2 Abstandhalter 5 vorgesehen, die einen Spalt 11 zwischen der Oberfläche 12 des Grundkörpers 2 und der Oberfläche 13 der Form 7 gewährleisten.

Die Spaltbreite beträgt etwa 0.2 mm.

Der Spalt 11 bewirkt, dass zwischen dem Rand 14 der Alveole 8 und dem Rand 15 des in die Alveole 8 eintauchenden Stempels 3 überschüssige Lebensmittelmasse austreten kann und einen Film auf der Oberfläche 13 der Form bildet.

Im gezeigten Beispiel ist der Abstandhalter 5 in den Grundkörper 2 versenkt.

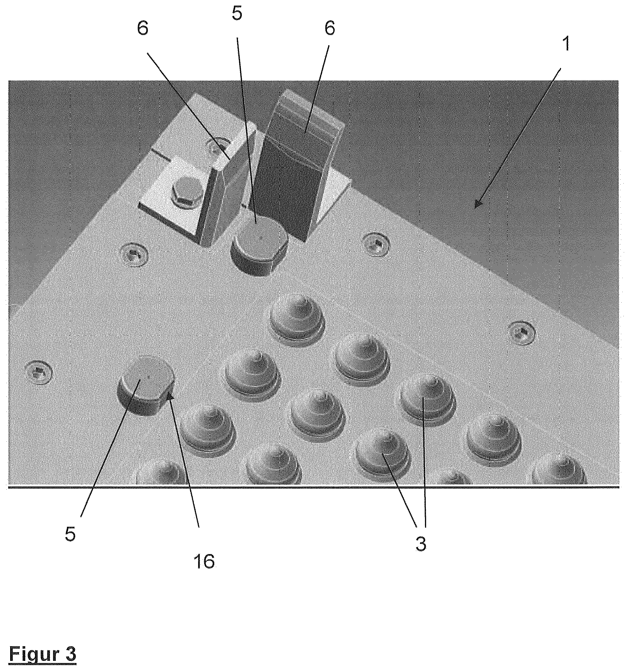

Figur 3 zeigt eine zweite perspektivische Ansicht auf die Stempelplatte 1. Die Abstandhalter 5 weisen eine Angriffsfläche 16 für ein nicht dargestelltes Werkzeug auf.

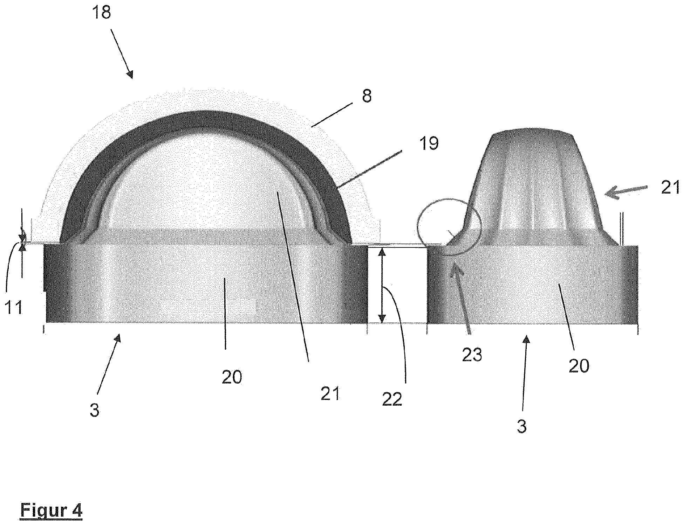

Figur 4 zeigt ein Alveolen-Stempelpaar 18 und einen Stempel 3 in seitlicher Ansicht.

Der Stempel 3 wird in die Alveole 8 eingeführt und schliesst mit dieser ein Volumen 19 ein, in welcher Lebensmittelmasse geformt wird, wobei der Stempel 3 die Innenkontur des schalenartigen Verzehrguts definiert und die Alveole 8 die Aussenkontur.

Der Stempel 3 weist einen Sockel 20 und ein Formelement 21 auf, das fast vollständig in die Alveole 8 eintritt. Der Sockel 20 besitzt eine Höhe 22, die geringfügig kleiner ist als die eines nicht dargestellten Abstandselements, sodass sich ein Spalt 11 für den Austritt überschüssiger Lebensmittelmasse bilden kann.

Das Formelement 21 besitzt eine Deckelschräge 23, über welche überschüssige Lebensmittelmasse gelichmässig aus dem Volumen 19 in den Spalt ausgetragen wird. Gleichzeitig wird das schalenartige Verzehrprodukt so geformt, dass sich leicht ein Deckel auftragen lässt, der guten Kontakt zu dem Produkt im Bereich der Deckelschräge hat.

## Patentansprüche

1. Stempelplatte für eine Vorrichtung zur Herstellung schalenartig geformter Verzehrgüter aus einer Lebensmittelmasse, insbesondere einer Fettmasse, vorzugsweise einer kakaohaltigen bzw. schokoladeartigen Fettmasse, umfassend
- einen Grundkörper (2) mit einer Oberfläche; und
- mindestens einen auf dem Grundkörper (2) angeordneten, temperierbaren Stempel (3), der sich von der Oberfläche des Grundkörpers (2) wegerstreckt, der in eine mit dem Stempel (3) korrespondierende Alveole (8) einer Form (7), in der sich die Lebensmittelmasse befindet, eintauchbar ist, wobei der Stempel ein Sockelelement (20) und ein Formelement (21) zum Eintauchen in die Alveole (8) umfasst;
**dadurch gekennzeichnet, dass**
auf dem Grundkörper (2) mindestens ein weiteres, erhabenes Element (4) als Abstandhalter (5) zur Form (7) angeordnet ist und
der Abstandhalter (5) vom Grundkörper (2) weniger erhaben ist als der vom Grundkörper (2) entfernteste Punkt des Stempels (3), wobei der Abstandhalter (5) eine maximale Höhe über dem Grundkörper (2) besitzt, die grösser ist als die maximale Höhe (22) des Sockelelements (20), sodass sich zwischen dem Rand der Alveole (8) und dem in die Alveole (8) eintauchenden Stempel (3) ein Spalt (11) bildet, der bevorzugt eine Spaltbreite zwischen 0.1 und 1mm aufweist.

2. Stempelplatte gemäss Anspruch 1, **dadurch gekennzeichnet, dass** mehrere Abstandhalter (5) und mehrerer Stempel (3) auf dem Grundkörper (2) angeordnet sind, wobei die Abstandhalter (5) insbesondere im Randbereich (9) des Grundkörpers (2) und vorzugsweise um die Stempel (3) herum verteilt angeordnet sind.

3. Stempelplatte gemäss einem der Ansprüche 1 oder 2, **dadurch gekennzeichnet, dass** der mindestens eine Abstandhalter (5) aus Metall ausgeführt ist, insbesondere als Drehteil.

4. Stempelplatte gemäss einem der Ansprüche 1 bis 3, **dadurch gekennzeichnet, dass** der mindestens eine Abstandhalter (5) von dem Grundkörper (2) demontierbar ist, insbesondere ein Gewinde aufweist, mit welchem er an einem korrespondierenden Gewinde des Grundkörpers (2) lösbar befestigt ist, und/oder dass der mindestens eine Abstandhalter (5) eine Angriffsfläche (16) für ein Werkzeug aufweist, insbesondere eine Mehrkantform aufweist.

5. Stempelplatte gemäss einem der vorhergehenden Ansprüche, **dadurch gekennzeichnet, dass** auf oder an dem Grundkörper (2) mindestens eine Führung für die Form (7) angeordnet ist.

6. Vorrichtung zur Herstellung schalenartig geformter Verzehrgüter aus einer Lebensmittelmasse, insbesondere einer Fettmasse, vorzugsweise einer kakaohaltigen bzw. schokoladeartigen Fettmasse, mit einer Stempelplatte (1) gemäss einem der vorhergehenden Ansprüche und einer Aufnahme für eine Form (7) mit mindestens einer Alveole (8) zum Einfüllen von fliessfähiger Lebensmittelmasse.

7. Vorrichtung gemäss Anspruch 6, **dadurch gekennzeichnet, dass** die Vorrichtung eine Form (7) mit mindestens einer Alveole (8) zum Einfüllen von fliessfähiger Lebensmittelmasse umfasst, wobei der mindestens eine Abstandhalter (5) an der Stempelplatte (1) so angeordnet ist, dass er beim Formen der Lebensmittelmasse auf der Oberfläche der Form (7) aufliegt.

8. Vorrichtung gemäss Anspruch 1, **dadurch gekennzeichnet, dass** die Breite des Spaltes (11) etwa 0.1 bis 0.3 mm, bevorzugt etwa 0.18 bis 0.22 mm beträgt.

9. Vorrichtung gemäss einem der Ansprüche 7 bis 8, **dadurch gekennzeichnet, dass** die Form (7) aus Kunststoff gefertigt ist und Versteifungsstege aufweist, wobei der mindestens eine Abstandhalter (5) so angeordnet ist, dass er beim Formen der Lebensmittelmasse auf der Form (7) im Bereich eines Verbindungssteges aufliegt.

10. Verfahren zum Herstellen von schalenartig geformten Verzehrgütern aus mindestens einer Lebensmittelmasse, insbesondere einer Fettmasse, vorzugsweise einer kakaohaltigen bzw. schokoladeartigen Fettmasse, in einer Vorrichtung gemäss einem der Ansprüche 6 bis 9, umfassend den Schritt des Absenkens eines Stempels (3) einer Stempelplatte (1) in eine korrespondierende Alveole (8) einer Form (7), derart, dass ein an der Stempelplatte (1) angeordneter Abstandhalter (5) auf der Oberfläche (13) der Form (7) aufliegt, wobei ein Spalt (11) zwischen dem Rand der Alveole (8) der Form (7) und dem in die Alveole (8) der Form (7) eintauchenden Stempel (3) gewährleistet wird, und wobei der Spalt (11) vorzugsweise eine Breite zwischen 0.1 und 0.3 mm aufweist.

11. Verfahren gemäss Anspruch 10, wobei überschüssige Lebensmittelmasse beim Eintauchen des Stempels (3) in die Alveole (8) durch den Spalt (11) austritt und einen Film aus überschüssiger Lebensmittelmasse um die Alveole (8) herum bildet.

12. Verfahren gemäss Anspruch 11, **dadurch gekennzeichnet, dass** nach der Formung der Lebensmittelmasse und nach dem Herausheben des Stempels (3) aus der Alveole (8) die überschüssige Lebensmittelmasse von der Form (7) entfernt wird, insbesondere mit einer Leckwalze.

13. Verfahren zum Umrüsten einer Stempelplatte (1) für eine Vorrichtung zur Herstellung schalenartig geformter Verzehrgüter aus einer Lebensmittelmasse, insbesondere einer Fettmasse, vorzugsweise einer kakaohaltigen bzw. schokoladeartigen Fettmasse, wobei die Vorrichtung eine Aufnahme für eine Form (7) mit mindestens einer Alveole (8) zum Einfüllen von fliessfähiger Lebensmittelmasse aufweist, und wobei auf der Stempelplatte (1) mindestens ein temperierbarer Stempel (3), der sich von einer Oberfläche eines Grundkörpers (2) der Stempelplatte (1) wegerstreckt, angeordnet ist, der ein Sockelelement und ein Formelement umfasst, wobei an der Stempelplatte (1) mindestens ein Abstandhalter (5) montiert wird, der eine maximale Höhe über dem Grundkörper besitzt, welche grösser ist als die maximale Höhe des Sockelelements, der einen Spalt (11) zwischen dem Rand der Alveole (8) der Form (7) und dem in die Alveole (8) der Form (7) eintauchenden Stempel (3) gewährleistet.

## Claims

1. Stamp plate for a device for producing shell-like edible products from a food mass, in particular a fatty mass, preferably a cocoa-containing or chocolate-like fatty mass, comprising
- a basic body (2) with a surface; and
- at least one temperature-controllable stamp (3) that is arranged on the basic body (2), extends away from the surface of the basic body (2), and is able to be introduced into a cell (8), corresponding to the stamp (3), of a mould (7), in which the food mass is located, wherein the stamp comprises a base element (20) and a mould element (21) for introducing into the cell (8);
**characterized in that**
at least one further, raised element (4) is arranged on the basic body (2) as a spacer (5) with respect to the mould (7) and
the spacer (5) is raised from the basic body (2) less than the point of the stamp (3) furthest from the basic body (2), wherein the spacer (5) has a maximum height above the basic body (2), said maximum height being greater than the maximum height (22) of the base element (20), such that a gap (11) is formed between the periphery of the cell (8) and the stamp (3) introduced into the cell (8), said gap (11) preferably having a gap width of between 0.1 and 1 mm.

2. Stamp plate according to Claim 1, **characterized in that** a plurality of spacers (5) and a plurality of stamps (3) are arranged on the basic body (2), wherein the spacers (5) are arranged in particular in the peripheral region (9) of the basic body (2) and preferably in a manner distributed around the stamps (3).

3. Stamp plate according to either of Claims 1 and 2, **characterized in that** the at least one spacer (5) is made of metal, in particular as a turned part.

4. Stamp plate according to one of Claims 1 to 3, **characterized in that** the at least one spacer (5) is able to be removed from the basic body (2), and in particular has a thread with which it is fastened releasably to a corresponding thread of the basic body (2), and/or
**in that** the at least one spacer (5) has an engagement face (16) for a tool, in particular has a polygonal shape.

5. Stamp plate according to one of the preceding claims, **characterized in that** at least one guide for the mould (7) is arranged on the basic body (2) .

6. Device for producing shell-like edible products from a food mass, in particular a fatty mass, preferably a cocoa-containing or chocolate-like fatty mass, having a stamp plate (1) according to one of the preceding claims and a receptacle for a mould (7) having at least one cell (8) for filling with flowable food mass.

7. Device according to Claim 6, **characterized in that** the device comprises a mould (7) having at least one cell (8) for filling with flowable food mass, wherein the at least one spacer (5) is arranged on the stamp plate (1) such that it bears on the surface of the mould (7) when the food mass is being moulded.

8. Device according to Claim 1, **characterized in that** the width of the gap (11) is approximately 0.1 to 0.3 mm, preferably approximately 0.18 to 0.22 mm.

9. Device according to either of Claims 7 and 8, **characterized in that** the mould (7) is manufactured from plastics material and has reinforcing webs, wherein the at least one spacer (5) is arranged such that it bears on the mould (7) in the region of a connecting web when the food mass is being moulded.

10. Method for producing shell-like edible products from at least one food mass, in particular a fatty mass, preferably a cocoa-containing or chocolate-like fatty mass, in a device according to one of Claims 6 to 9, comprising the step of lowering a stamp (3) of a stamp plate (1) into a corresponding cell (8) of a mould (7) such that a spacer (5) arranged on the stamp plate (1) bears on the surface (13) of the mould (7), wherein a gap (11) is ensured between the periphery of the cell (8) of the mould (7) and the stamp (3) introduced into the cell (8) of the mould (7), and wherein the gap (11) preferably has a width of between 0.1 and 0.3 mm.

11. Method according to Claim 10, wherein excess food mass escapes through the gap (11) when the stamp (3) is introduced into the cell (8), and forms a film of excess food mass around the cell (8).

12. Method according to Claim 11, **characterized in that**, after the food mass has been moulded and after the stamp (3) has been lifted out of the cell (8), the excess food mass is removed from the mould (7), in particular using a wiper roller.

13. Method for retrofitting a stamp plate (1) for a device for producing shell-like edible products from a food mass, in particular a fatty mass, preferably a cocoa-containing or chocolate-like fatty mass, wherein the device has a receptacle for a mould (7) having at least one cell (8) for filling with flowable food mass, and wherein at least one temperature-controllable stamp (3) that extends away from a surface of a basic body (2) of the stamp plate (1) is arranged on the stamp plate (1), said stamp (3) comprising a base element and a mould element, wherein at least one spacer (5) is mounted on the stamp plate (1), said spacer (5) having a maximum height above the basic body that is greater than the maximum height of the base element, and ensuring a gap (11) between the periphery of the cell (8) of the mould (7) and the stamp (3) introduced into the cell (8) of the mould (7).

## Revendications

1. Plaque de poinçons pour un dispositif de fabrication de produits comestibles moulés en forme de coquille à partir d'une masse de produit alimentaire, en particulier d'une masse de graisse, de préférence d'une masse de graisse contenant du cacao ou de type chocolat, comportant
- un corps de base (2) doté d'une surface ; et
- au moins un poinçon thermorégulable (3) disposé sur le corps de base (2), lequel poinçon s'étend à partir de la surface du corps de base (2) à l'écart de celle-ci, et lequel peut être introduit dans une alvéole (8) d'un moule (7), laquelle alvéole correspond au poinçon (3) et dans laquelle la masse de produit alimentaire se trouve, dans laquelle le poinçon comporte un élément de base (20) et un élément de moulage (21) destiné à être introduit dans l'alvéole (8) ;
**caractérisée en ce**
**qu'**au moins un autre élément en relief (4) est disposé sur le corps de base (2) comme pièce d'écartement (5) par rapport au moule (7) et
la pièce d'écartement (5) est moins en relief par rapport au corps de base (2) que le point du poinçon (3) le plus éloigné du corps de base (2), la pièce d'écartement (5) présentant une hauteur maximale au-dessus du corps de base (2), laquelle hauteur est supérieure à la hauteur maximale (22) de l'élément de base (20), de telle sorte qu'il se forme un interstice (11) entre le bord de l'alvéole (8) et le poinçon (3) introduit dans l'alvéole (8), lequel interstice présente de préférence une largeur d'interstice comprise entre 0,1 et 1 mm.

2. Plaque de poinçons selon la revendication 1, **caractérisée en ce que** plusieurs pièces d'écartement (5) et plusieurs poinçons (3) sont disposés sur le corps de base (2), les pièces d'écartement (5) étant disposées en particulier dans la région de bord (9) du corps de base (2) et de préférence de manière répartie autour des poinçons (3).

3. Plaque de poinçons selon l'une des revendications 1 ou 2, **caractérisée en ce que** l'au moins une pièce d'écartement (5) est réalisée à partir de métal, en particulier comme pièce tournée.

4. Plaque de poinçons selon l'une des revendications 1 à 3, **caractérisée en ce que** l'au moins une pièce d'écartement (5) peut être démontée du corps de base (2), en particulier comprend un filetage à l'aide duquel elle peut être fixée de manière amovible à un filetage correspondant du corps de base (2), et/ou **en ce que** l'au moins une pièce d'écartement (5) comprend une surface d'entrée en prise (16) pour un outil, en particulier présente une forme polygonale.

5. Plaque de poinçons selon l'une des revendications précédentes, **caractérisée en ce qu'**au moins un guide pour le moule (7) est disposé sur ou contre le corps de base (2).

6. Dispositif de fabrication de produits comestibles moulés en forme de coquille à partir d'une masse de produit alimentaire, en particulier d'une masse de graisse, de préférence d'une masse de graisse contenant du cacao ou de type chocolat, comprenant une plaque de poinçons (1) selon l'une des revendications précédentes et un logement pour un moule (7) comprenant au moins une alvéole (8) destinée à être remplie de masse de produit alimentaire coulante.

7. Dispositif selon la revendication 6, **caractérisé en ce que** le dispositif comporte un moule (7) doté d'au moins une alvéole (8) destinée à être remplie de masse de produit alimentaire coulante, l'au moins une pièce d'écartement (5) étant disposée sur la plaque de poinçons (1) de telle sorte qu'elle repose sur la surface du moule (7) lors du moulage de la masse de produit alimentaire.

8. Dispositif selon la revendication 1, **caractérisé en ce que** la largeur de l'interstice (11) vaut approximativement 0,1 à 0,3 mm, de préférence approximativement 0,18 à 0,22 mm.

9. Dispositif selon l'une des revendications 7 à 8, **caractérisé en ce que** le moule (7) est fabriqué à partir de matière synthétique et comprend des nervures de renforcement, l'au moins une pièce d'écartement (5) étant disposée de telle sorte qu'elle repose sur le moule (7) dans la région d'une nervure de liaison lors du moulage de la masse de produit alimentaire.

10. Procédé de fabrication de produits comestibles moulés en forme de coquille à partir d'au moins une masse de produit alimentaire, en particulier d'une masse de graisse, de préférence d'une masse de graisse contenant du cacao ou de type chocolat, dans un dispositif selon l'une des revendications 6 à 9, comportant les étapes d'abaissement d'un poinçon (3) d'une plaque de poinçons (1) dans une alvéole correspondante (8) d'un moule (7), de telle sorte qu'une pièce d'écartement (5) disposée sur la plaque de poinçons (1) repose sur la surface (13) du moule (7), dans lequel un interstice (11) entre le bord de l'alvéole (8) du moule (7) et le poinçon (3) introduit dans l'alvéole (8) du moule (7) est garanti, et dans lequel l'interstice (11) présente de préférence une largeur comprise entre 0,1 et 0,3 mm.

11. Procédé selon la revendication 10, dans lequel la masse de produit alimentaire en excès lors de l'introduction du poinçon (3) dans l'alvéole (8) sort à travers l'interstice (11) et forme un film constitué de masse de produit alimentaire en excès autour de l'alvéole (8).

12. Procédé selon la revendication 11, **caractérisé en ce qu'**après le moulage de la masse de produit alimentaire et après le soulèvement du poinçon (3) hors de l'alvéole (8), la masse de produit alimentaire en excès est retirée du moule (7), en particulier à l'aide d'un rouleau lécheur.

13. Procédé de rattrapage d'une plaque de poinçons (1) pour un dispositif de fabrication de produits comestibles moulés en forme de coquille à partir d'une masse de produit alimentaire, en particulier d'une masse de graisse, de préférence d'une masse de graisse contenant du cacao ou de type chocolat, dans lequel le dispositif comprend un logement pour un moule (7) comprenant au moins une alvéole (8) destinée à être remplie de masse de produit alimentaire coulante, et dans lequel au moins un poinçon thermorégulable (3) est disposé sur la plaque de poinçons (1), lequel poinçon s'étend à partir d'une surface d'un corps de base (2) de la plaque de poinçons (1) à l'écart de cette surface, lequel poinçon comporte un élément de base et un élément de moulage, dans lequel au moins une pièce d'écartement (5) est montée sur la plaque de poinçons (1), laquelle pièce présente une hauteur maximale au-dessus du corps de base, laquelle hauteur est supérieure à la hauteur maximale de l'élément de base, qui garantit un interstice (11) entre le bord de l'alvéole (8) du moule (7) et le poinçon (3) introduit dans l'alvéole (8) du moule (7).
